# NEUE EUROPÄISCHE PATENTSCHRIFT

(11) **EP 2 183 099 B2**
(45) Veröffentlichungstag und Bekanntmachung des Hinweises auf die Entscheidung über den Einspruch: **08.08.2018**
(45) Hinweis auf die Patenterteilung: 04.09.2013
(21) Anmeldenummer: 08828126.6
(22) Anmeldetag: 29.08.2008
(51) Int. Cl.: B32B 3/20, E04B 1/78

(54) **WANDAUFBAU UND WÄRMEDÄMMPLATTE**
WALL CONSTRUCTION AND THERMAL INSULATION PLATE
STRUCTURE DE MUR ET PANNEAU D'ISOLATION THERMIQUE

(30) Priorität: 30.08.2007 DE 102007040938
(43) Veröffentlichungstag der Anmeldung: 12.05.2010
(60) Teilanmeldung: 13181431.1
(73) Patentinhaber: Remmers Baustofftechnik GmbH, 49624 Löningen (DE)
(72) Erfinder: ENGEL, Jens, 49565 Bramsche (DE); LOHMANN, Thomas, 68526 Ladenburg (DE)
(74) Vertreter: Bockhorni & Kollegen
(86) Internationale Anmeldenummer: PCT/DE2008/001419
(87) Internationale Veröffentlichungsnummer: WO 2009/026910

(56) Entgegenhaltungen:
- EP-A- 0 086 681
- EP-A- 1 900 884
- WO-A-92/10624
- WO-A-2006/014858
- WO-A1-92/10624
- DE-A1- 3 317 628
- DE-A1- 3 610 932
- DE-A1- 19 706 223
- DE-A1-102004 050 207
- DE-A1-102007 027 470
- DE-A1-102007 027 477
- DE-T2- 60 024 205
- DE-U1-202005 005 231
- ES-A1- 2 161 608
- FR-A1- 2 552 140

## Beschreibung

Die Erfindung betrifft einen Wandaufbau mit einer innenseitigen Dämmschicht. Weiterhin betrifft die Erfindung eine Wärmedämmplatte, insbesondere zur Verwendung in einem Wandaufbau.

Typischerweise werden Gebäude auf der Außenseite des Mauerwerks gedämmt oder mit einem Dämmstoff ausgestattet. Dadurch ist die Temperatur der Wand relativ hoch, weil der Temperaturabfall insbesondere im außenliegenden Dämmstoff stattfindet. Im Fall einer Dämmung der Mauer auf der Innenseite findet der Temperaturabfall im wesentlichen im innenliegenden Dämmstoff statt. Dadurch ist die Temperatur des Mauerwerks viel niedriger als bei einer Außendämmung. Der Dampfdruckgradient ist dann höher und es gelangt mehr Feuchtigkeit in die Wand. Die Kondensatebene befindet sich dann in der Nähe der Dämmschicht auf der Innenseite der Wand. Durch das Kondensat können Bauschäden entstehen.

Um eine leicht zu verarbeitende Innendämmung zu schaffen, die dieses Problem behebt, wird in der DE 203 05 348 U1 ein Wärmedämmetement zur Innenisolierung vorgeschlagen, das auf einer Dämmschicht eine Dampfsperre und eine dem Innenraum zugewandte, feuchtigkeitsaufnehmende Stabilisierungsschicht aufweist. Die aus dem Innenraum stammende Feuchtigkeit wird von der Dampfsperre aufgehalten. Ein Problem ist bei Lösungen dieser Art darin zu sehen, daß die Dampfsperre leicht verletzt werden kann, beispielsweise durch Einschlagen von Nägeln. Ein weiteres Problem besteht in der Verhinderung der Austrocknung von Schlagregenniederschlägen nach Innen. Aufgrund der Innendämmung wird die Gebäudekonstruktion selbst kälter, wodurch die zur Verdunstung des in die Außenseite eingedrungenen Regens notwendige Energie nicht mehr zur Verfügung steht. Somit verbleibt mehr Feuchte in der Konstruktion und die Frostgefährdung steigt.

Die DE 101 46 174 C2 schlägt eine Wärmedämmplatte vor, die neben einer Dämmschicht innenseitig eine wasserbeständige mineralische Schicht mit einer besonderen Kapillaraktivität aufweist. Hierzu wird typischerweise Calciumsilikat verwendet. Mit dem Calciumsilikat wird die Diffusionsoffenheit der Wand aufrechterhalten. Ein Problem dabei ist jedoch die verhältnismäßig geringe Wärmedämmleistung der homogen aufgebauten Calciumsilikatschicht, die deutlich niedriger ist als die herkömmlicher Dämmstoffe für die Außendämmung. Auch die Kosten der Calciumslikatschicht sind vergleichsweise hoch.

Der Erfindung liegt die Aufgabe zugrunde, einen Wandaufbau und eine Wärmedämmplatte der eingangs genannten Art zu schaffen, die bei hoher Dämmung diffusionsoffen und preisgünstig herstellbar ist.

Die Lösung dieser Aufgabe erfolgt mit einem Wandaufbau mit den Merkmalen des Patentanspruchs 1. Hinsichtlich der Wärmedämmplatte erfolgt die Lösung der Aufgabe mit einer Wärmedämmplatte mit den Merkmalen des Patentanspruchs 8. Vorteilhafte Ausgestaltungen der Erfindung sind in den Unteransprüchen beschrieben.

Bei einem Wandaufbau mit einer Dämmschicht, insbesondere innenseitigen Dämmschicht, insbesondere einer Wärmedämmplatte, ist erfindungswesentlich vorgesehen, daß die Schicht kapillarleitfähige Bereiche aufweist, die von einer Seite der Dämmschicht zur anderen Seite der Dämmschicht verlaufen. Die kapillarleitfähigen Bereiche sind dabei durchgehend ausgebildet. "Durchgehend" ist im Sinne einer ununterbrochenen kapillaren Leitfähigkeit zu verstehen. Die Seiten der Dämmschicht bezeichnen die dem Innenraum und dem Mauerwerk zugewandten Flächen.

Durch die kapillarleitfähigen Bereiche kann Kondensat von der Außenseite der Dämmschicht also der wandseitigen Seite der Dämmschicht abgeführt und zurück in den Innenraum geführt werden. Dadurch werden Feuchtigkeits- und Schimmelprobleme im Mauerbereich vermieden. Außerdem wird die Diffusionsfähigkeit der Konstruktion sichergestellt. Auch kann von Außen eingedrungene Feuchtigkeit nach Innen abgegeben werden und die Konstruktion wird so getrocknet. Dies ist insbesondere an der Schlagregenseite von Relevanz.

Mit der Erfindung wird eine preisgünstige, sehr gut wärmedämmende Platte bzw. ein solcher Wandaufbau geschaffen, der kapillarleitfähig ist. Im Ergebnis wird dadurch eine diffusionsaktive und kapillarleitfähige Innendämmung geschaffen, die eine mit der heute üblichen Außendämmung vergleichbare Dämmung und Energieeinsparung erreicht.

In einer bevorzugten Ausgestaltung sind die kapillarleitfähigen Bereiche als kapillarleitfähige Durchbrüche ausgebildet, insbesondere als Durchbrüche, die mit einem kapillarleitfähigen Material gefüllt sind. Alternativ können die Durchbrüche selbst so ausgebildet sein, daß diese von sich aus kapillar-leitfähig sind. Dies kann insbesondere bei Schaumstoffplatten erreicht werden, die quer zur Plattenebene verlaufende Kapillaren ausbilden. Die Kapillare können senkrecht oder schräg zur Plattenebene verlaufen. Insbesondere bei dieser Art der Ausführungsform können die kapillarleitfähigen Bereiche flächig ausgebildet sein und nahezu die gesamte Dämmschicht ausmachen. Bevorzugt werden in einem solchen Fall die Wände dieser Durchbrüche mit benetzungsfördemden Stoffen beschichtet. Die kapillarleitfähigen Bereiche machen 1 bis weniger als 2 % der gedämmten Fläche aus.

In einer bevorzugten Ausgestaltung der Erfindung weist der Wandaufbau eine kapillarleitfähige Schicht auf, die wandseitig hinter der Dämmschicht angeordnet und mit den kapillarleitfähigen Bereichen verbunden ist. Eine solche Schicht kann anfallendes Kondensat aufnehmen und den kapillarleitfähigen Bereichen zuführen. Außerdem stellt sie die Atmungsfähigkeit des Wandaufbaus sicher und leistet einen Beitrag zur Wärmedämmung. Diese Schicht kann entweder Bestandteil der Dämmung bzw. der Dämmplatte sein oder ist bevorzugt gleichzeitig eine Klebschicht, mit der die Wärmedämmplatte an einer Mauer befestigt wird. Insbesondere kann dies auch ein Material, beispielsweise ein Mörtel sein, der beim Aufbringen einer Dämmplatte mit Durchbrüchen einerseits die kapillarleitfähige Schicht ausbildet und andererseits gleichzeitig durch die vorgefertigten Durchbrüche in einer Dämmplatte durchtritt und in diesen Durchbrüchen die kapillarleitfähigen Bereiche ausbildet. Der Wandaufbau besteht aus einzelnen Schichten, denen spezifische Aufgaben wie Wärmedämmung, Atmungsfähigkeit oder Feuchtepufferung zugewiesen sind.

Ein weiterer Aspekt der Erfindung besteht in der Bereitstellung einer Wärmedämmplatte nach Anspruch 8. Die kapillarleitfähigen Bereiche sind dabei quer zur Dämmschicht ausgerichtet. Der Begriff "quer" ist hier als geometrische Orientierung in dem Sinne zu verstehen, dass die kapillarleitfähigen Bereiche quer zur Plattenebene verlaufen, also die beiden sich gegenüberliegenden Plattenflächen miteinander verbinden. Dies kann senkrecht oder unter einem Winkel oder schräg zur Plattenebene erfolgen. Bevorzugt sind die kapillarleitfähigen Bereiche senkrecht zur Plattenebene orientiert. Die kapillarleitfähigen Bereiche sind auch hier "durchgehend" durch die Dämmschicht ausgebildet. Insbesondere durchdringen diese Bereiche vollständig die Dämmschicht. Die übrige Dämmschicht ist nicht oder nur unwesentlich kapillarleitfähig, jedenfalls wesentlich weniger kapillarleitfähig als die eingebrachten kapillarleitfähigen Bereiche.

Bevorzugt sind diese kapillarleitfähigen Bereiche durch Durchbrüche realisiert, in denen ein kapillarleitfähiges Material eingebracht ist. Der Aufbau der Wärmedämmplatte ist bevorzugt in ähnlicher Form ausgestaltet wie der Wandaufbau. Bevorzugt weist die Wärmedämmplatte auf der Seite, die zum wandseitigen Einbau vorgesehen ist, eine kapillarleitfähige Schicht auf, die mit den kapillarleitfähigen Bereichen verbunden ist. Die Materialien der kapillarleitfähigen Schicht und der kapillarleitfähigen Bereiche sind bevorzugt identisch. Es können jedoch auch unterschiedliche Stoffe verbunden werden. Die kapillarleitfähigen Bereiche können dabei auch bis in die kapillarleitfähige Schicht hinein ausgebildet und auch bis zu deren Ende ausgebildet sein. Auf der gegenüberliegenden Seite weist die Wärmedämmplatte eine kapillarleitfähige Feuchtepufferschicht auf. Diese dient zur kurzfristigen Aufnahme von Feuchtigkeit aus dem Innenraum und zur Regulierung des Raumklimas. Diese Schicht trägt auch einen Anteil zur Wärmedämmung bei. Weiterhin kann über diese Schicht auch die durch die kapillarleitfähigen Bereiche hindurch transportierte Feuchtigkeit verteilt und damit über eine größere Oberfläche an den Innenraum abgegeben werden. Alternativ können die kapillarleitfähigen Bereiche auch durch Hohlräume gebildet sein. Insbesondere z.B. bei Verwendung von Schaumstoff oder anderen ähnlichen Materialien kann durch Einbringen einer großen Vielzahl von kleinsten Stichen oder Schnitten eine Kapillarleitfähigkeit erreicht werden. Mit solchen, z.B. mit einer Nadel eingebrachten Stichen wird ein sehr kleiner kapillarleitfähiger Hohlraum bzw. Öffnung geschaffen, in die nicht unbedingt ein anderes Material eingesetzt werden müßte, sondern auch als Hohlraum bzw. bei Füllung mit Luft kapillarleitfähig ist.

In einer anderen bevorzugten Ausgestaltung der Erfindung ist die Dämmschicht der Dämmplatte und auch die Dämmschicht in dem Wandaufbau dicker als die anderen beschriebenen Schichten. Insbesondere ist die Dämmschicht bevorzugt dicker als die Summe der Dicken der kapillarleitfähigen Schicht und der Feuchtepufferschicht zusammen, bevorzugt sogar dicker als das zweifache der Summe aus kapillarleitfähiger Schicht und Feuchtepufferschicht.

Die Dämmschicht ist bevorzugt aus bei der Außendämmung gängigen Materialien, wie Mineralwolle und Schaumstoffprodukten hergestellt. Diese weisen typischerweise deutlich günstigere Dämmwerte als Calciumsilikatplatten auf. Die Dämmschicht ist dabei ohne die kapillarleitfähigen Durchbrüche typischerweise nicht oder nur unwesentlich kapillarleitfähig. Materialien, die hier verwendet und mit kapillarleitfähigen Durchbrüchen versehen werden können, sind beispielsweise Schaumglas, Blähperlit, expandiertes Polystyrol, expandiertes Vermiculit, flexibler Elastomerschaum, Mineralwolle, Polyisocyanurat-Schaum, Polyethylenschaum, Phenolharzschaum/hartschaum, Polyurethan-Hartschaum, Harnstoff-Formaldehydharz-Schaum, extrudierter Polystyrolschaum, expandierter Kork, Blähtonleichtzuschlagsstoffe, Holzfaser, Holzwolle und Zellulosefüllstoff. Die kapillarleitende Schicht kann ebenfalls aus einer Vielzahl verschiedener Materialen hergestellt sein, die im folgenden beispielhaft aufgezählt werden. Die kapillarleitfähigen Bereiche können mit Durchbrüchen realisiert sein, die mit einem kapillarleitfähigen Material gefüllt sind. Bevorzugt ist das Material in den Durchbrüchen dasselbe wie das der kapillarleitfähigen Schicht. Dadurch läßt sich die Herstellung vereinfachen. Bei der Herstellung des Wandaufbaus besteht auch die Möglichkeit, eine solche Schicht, z.B. Mörtel, zuerst auf einer Wand oder einer Mauer aufzubringen und Wärmedämmplatten mit vorgefertigten Durchbrüchen in den kapillarleitfähigen Mörtel einzudrücken, so daß dieser aus den Löchern herausquillt und dadurch die kapillarleitfähigen Bereiche ausbildet. Für die kapillarleitfähige Schicht kann ein Mörtel in verschiedenen Zusammensetzungen verwendet werden. Als Füllstoffe können sowohl poröse als auch nicht poröse Formen eingesetzt werden. Als Bindemittel können mineralische Bindemittel wie Zement, Gips, Tonerdeschmelzzement, Silikat oder Phosphat eingesetzt werden. Alternativ können auch Harze als Bindemittel eingesetzt werden. Als Harze können Naturharze, 2-Komponentenharze wie Epoxyharze, PMMA oder PU oder es können auch Dispersionsharze wie Acrylat oder Stryrol-Butadien oder andere eingesetzt werden.

Die sichtseitige, insbesondere innenraumseitige Feuchtepufferschicht ist bevorzugt als Putz ausgebildet. Dieser kann wiederum bevorzugt aus Lehm, einem Klimaputz oder anderen diffusionsfähigen Materialien bestehen. Zur Pufferung können zusätzlich geeignete Materialien wie Glykole, wasserspeichernde Polymere oder ähnliche enthalten sein.

Es liegt ebenfalls im Bereich der Erfindung die Wärmedämmplatte bzw. den Wandaufbau als Innendämmung, Klimaplatte für Feuchträume und auch für Decke, Wand und Boden einzusetzen. Der Wandaufbau und auch die Wärmedämmplatte können grundsätzlich auch so ausgerichtet werden, daß eine solche Wärmedämmung auf der Außenseite des Mauerwerks angeordnet wird.

Es versteht sich, daß die oben gegebenen Detailbeschreibungen, insbesondere hinsichtlich Materialauswahl und Funktion und in der folgenden Figurenbeschreibung, insbesondere hinsichtlich der Dimensionierung angegebenen Einzelheiten, die entweder für den Wandaufbau oder für Wärmedämmplatte beschrieben sind, umgekehrt auch für die Wärmedämmplatte oder den Wandaufbau zutreffen und beansprucht werden.

Nachfolgend wird die Erfindung anhand eines in der Zeichnung dargestellten bevorzugten Ausführungsbeispiels weiter erläutert. Im Einzelnen zeigen die schematischen Darstellungen in:
- Fig. 1:: eine Draufsicht auf eine erfindungsgemäße Dämmplatte;
- Fig. 2:: eine geschnittene Seitenansicht einer erfindungsgemäßen Dämmplatte; und
- Fig. 3:: eine geschnittene Seitenansicht eines erfindungsgemäßen Wandaufbaus.

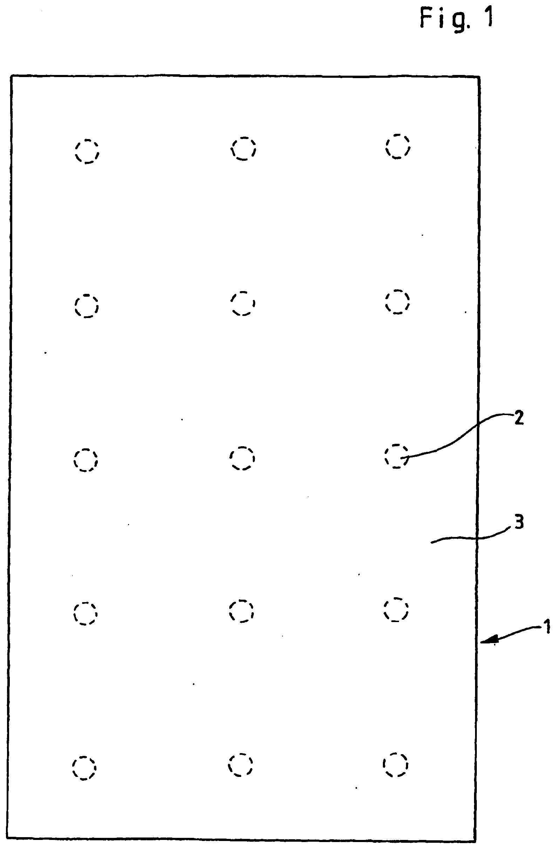

In Fig. 1 ist eine erfindungsgemäße Wärmedämmplatte 1 dargestellt, die im wesentlichen eine Dämmschicht 3 und quer zur Dämmplattenebene ausgerichtete kapillarleitfähige Bereiche 2 aufweist, die hier als Durchbrüche ausgebildet sind. Diese erstrecken sich bevorzugt senkrecht zur Plattenebene und durchdringen diese vollständig, so daß ein Flüssigkeitstransport durch die Dämmschicht 3 hindurch möglich ist. Die Durchbrüche 2 sind in der Dämmschicht 3 gleichmäßig verteilt. Im gezeigten Beispiel nehmen diese Durchbrüche etwa 2 % der Fläche ein. Die Durchbrüche sind hier aus produktionstechnischen Gründen im Querschnitt kreisförmig. Grundsätzlich ist jedoch Form, Verlauf und Größe der einzelnen Durchbrüche nicht relevant.

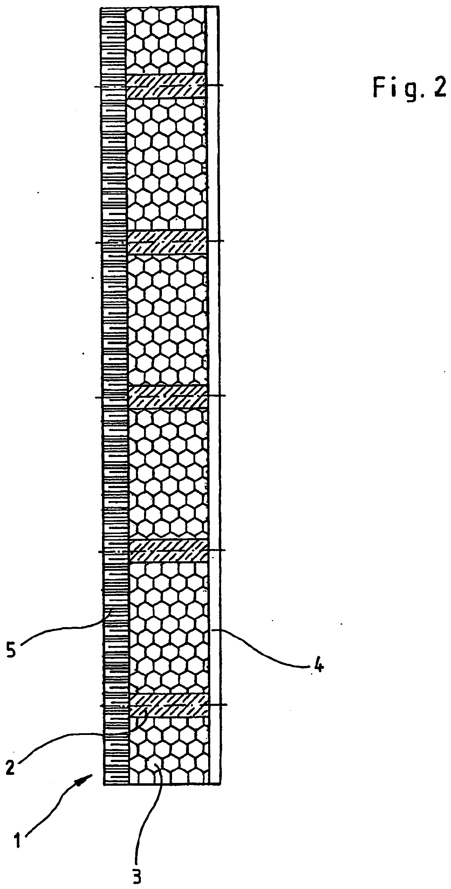

In Fig. 2 ist die Wärmedämmplatte 1 im Querschnitt dargestellt. Hier sind insbesondere auch die Dämmschicht 3 und die die Wärmedämmschicht 3 durchdringenden kapillarleitfähigen Bereiche 2 dargestellt. Wandseitig weist die Wärmedämmplatte 1 eine kapillarleitfähige Schicht 4 auf, die mit den kapillarleitfähigen Bereichen 2 in Verbindung steht. Diese Schicht 4 nimmt anfallendes Kondensat auf und führt sie den kapillarleitfähigen Bereichen 2 zu. Die kapillarleitfähigen Bereiche 2 leiten das Kondensat an die Außenseite der Wärmedämmplatte 1, also an den Innenraum weiter. Bevorzugt ist das Material der vertikalen Kapillarschicht 4 und das in den kapillarleitfähigen Bereichen 2 angeordnete Material identisch. Innenraumseitig weist die Wärmedämmplatte 1 noch eine kapillarleitfähige Pufferschicht 5 auf. Die Hauptaufgabe dieser Schicht ist die Abpufferung der Raumluftfeuchtigkeit über 24 Stunden und die Abgabe und Verteilung des durch die kapillarleitfähigen Bereiche 2 transportierten Kondensats. Auch diese Schicht 5 leistet einen Beitrag zur Atmungsaktivität und Wärmedämmung. In dieser bevorzugten Ausgestaltung beträgt die Schichtdicke der Dämmschicht 3 etwa 2/3 der Gesamtdicke, während die vertikale Kapillarschicht 4 1/6 und die Feuchtepufferschicht 5 2/6 ausmacht, also etwa doppelt so stark ist wie die vertikale Kapillarschicht 4. Die Dämmschicht 3 ist bevorzugt die dickste der drei Schichten. Die Dämmschicht mit den kapillarleitenden Durchbrüchen kann Dicken zwischen 5 mm und 120 mm, bevorzugt 15 mm und 80 mm, insbesondere zwischen 20 mm und 60 mm und bevorzugt eine Stärke von 40 mm aufweisen. Die kapillarleitende Schicht 4 kann Stärken zwischen 0,1 mm und 20 mm insbesondere Stärken zwischen 1 mm und 5 mm aufweisen. Die Pufferschicht 5 kann Stärken zwischen 0,5 mm und 40 mm und bevorzugt zwischen 2 mm und 20 mm und insbesondere im Bereich von 4 mm bis 10 mm aufweisen. Die kapillarleitfähigen Bereiche 2 können anders als in der Zeichnung dargestellt auch bis in die vertikale Kapillarschicht 4 hinein oder auch bis in die Pufferschicht 5 hineinragen oder sogar den Abschluß bilden.

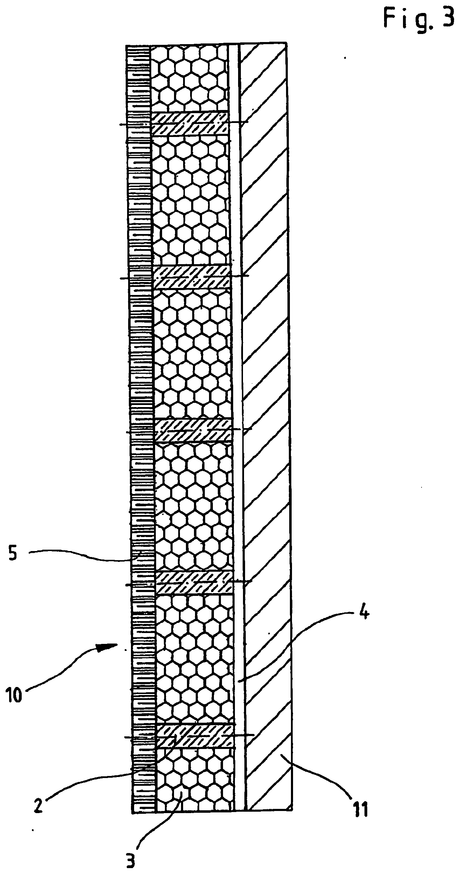

In Fig. 3 ist ein erfindungsgemäßer Wandaufbau 10 dargestellt. Dabei ist innenseitig die vorher beschriebene Dämmplatte angebracht oder der Wandaufbau ist in vergleichbarer Form vor Ort erstellt worden. Wesentlich ist, daß innenseitig an der Wand 11 eine Dämmschicht 3 mit quer zur Wand oder Dämmebene ausgerichteten kapillarleitfähigen Bereichen 2 angeordnet ist. Die kapillarleitfähige Schicht 4 kann bei diesem Wandaufbau sowohl Teil einer Dämmplatte sein, die aufgebracht wird oder gleichzeitig als Kleberschicht dienen, mit der die Dämmschicht 2 an der Wand 11 befestigt wird. Die Schicht 4 kann dabei auch aus einem Material oder in einer solchen Stärke auf der Wand 11 aufgebracht werden, daß beim Anbringen einer Dämmplatte mit Durchbrüchen diese Durchbrüche durch das kapillarleitfähige Material ausgefüllt werden. Die äußere kapillarleitfähige Pufferschicht 5 kann ebenfalls vor Ort erstellt oder alternativ als fertiges Plattensystem aufgebracht sein.

Ein konkretes Beispiel sieht dabei so aus, daß die Pufferschicht 5 von einem 6 mm starken Feuchteregulierungsputz gebildet ist. Zentral ist die Dämmschicht 3 vorgesehen, die hier aus einer 50 mm starken Schicht aus Polyurethan oder Polystyrol besteht. Dieses Material ist für sich gesehen nicht oder nur unwesentlich kapillarleitfähig. In einem quadratischen Raster mit Abständen von rund 40 mm sind Durchbrüche vorgesehen, die jeweils kreisförmig sind und einen Durchmesser von etwa 4 mm aufweisen. In den Durchbrüchen ist ein kapillarleitfähiger Mörtel eingebracht, der so den kapillarleitfähigen Bereich 2 ausbildet. Bei Ausbildung einer Dämmplatte ist das Raster so ausgebildet, daß die Durchbrüche zum Rand noch das halbe Rastermaß aufweisen, so daß bei Zusammensetzen zweier Dämmplatten das Raster wieder vollständig und kontinuierlich ausgebildet ist. An die Dämmschicht 3 schließt sich die Kapillarschicht 4 an, die im bevorzugten Ausführungsbeispiel aus einem kapillarleitfähigen Ansetzmörtel mit einer Schichtdicke von 5 mm gebildet ist. Eine solche Dämmplatte wird für die Innendämmung eingesetzt, kann jedoch auch grundsätzlich zur Außendämmung verwendet werden.

## Patentansprüche

1. Wandaufbau mit einer Wand (11) und mit einer innenseitigen Dämmschicht (3), wobei die Dämmschicht kapillarleitfähige Bereiche aufweist, die durchgehend von einer Seite der Dämmschicht zur anderen Seite der Dämmschicht verlaufen,
**dadurch gekennzeichnet, dass**
der Wandaufbau (10) eine kapillarleitfähige Schicht (4) aufweist, die wandseitig hinter der Dämmschicht (3) angeordnet und mit den kapillarleitfähigen Bereichen (2) verbunden ist, dass der Wandaufbau (10) sichtseitig eine kapillarleitfähige Feuchtepufferschicht (5) aufweist und dass die kapillarleitfähigen Bereiche 1 bis 2 % der Fläche der Dämmschicht ausmachen.

2. Wandaufbau nach Anspruch 1, **dadurch gekennzeichnet, dass** die kapillarleitfähigen Bereiche (2) als kapillarleitfähige Durchbrüche, die mit einem kapillarleitfähigen Material gefüllt sind, ausgebildet sind.

3. Wandaufbau nach Anspruch 1, **dadurch gekennzeichnet, dass** die kapillarleitfähigen Bereiche (2) durch kapillaraktive Hohlräume gekennzeichnet sind.

4. Wandaufbau nach Anspruch 3, **dadurch gekennzeichnet, dass** die kapillarleitfähige Schicht (4) aus demselben Material wie das Material in den kapillarleitfähigen Bereichen besteht.

5. Wandaufbau nach einem der Ansprüche 3 oder 4, **dadurch gekennzeichnet, dass** die kapillarleitfähige Schicht (4) eine Klebschicht ist.

6. Wandaufbau nach einem der vorhergehenden Ansprüche, **dadurch gekennzeichnet, dass** die Dämmschicht (3) dicker ist als die kapillarleitfähige Schicht (4) und die kapillarleitfähige Feuchtepufferschicht (5), insbesondere mehr als doppelt so dick ist, wie die Summe der beiden anderen Schichten.

7. Wandaufbau nach einem der vorhergehenden Ansprüche, **dadurch gekennzeichnet, dass** die Durchbrüche ein Durchmesser von etwa 4 mm aufweisen.

8. Wärmedämmplatte als Innendämmplatte mit einer Dämmschicht (3) für einen Wandaufbau, insbesondere für einen Wandaufbau nach einem der Ansprüche 1 bis 7, wobei die Dämmschicht (3) kapillarleitfähige Bereiche (2) aufweist, die durchgehend von einer Seite der Dämmschicht zur anderen Seite der Dämmschicht verlaufen, **dadurch gekennzeichnet, dass** die Wärmedämmplatte (1) eine kapillarleitfähige Schicht (4) aufweist, die mit den kapillarleitfähigen Bereichen verbunden ist, dass die Wärmedämmplatte (1) eine kapillarfähige Feuchtepufferschicht (5) aufweist,
dass die kapillarleitfähige Feuchtepufferschicht (5) und die kapillarleitfähige Schicht (4) auf entgegengesetzten Seiten der Dämmschicht (3) angeordnet sind, und dass die kapillarleitfähigen Bereiche 1 bis 2 % der gedämmten Fläche ausmachen.

9. Wärmedämmplatte nach Anspruch 8, **dadurch gekennzeichnet, dass** die kapillarleitfähigen Bereiche (2) sich senkrecht durch die Dämmschicht (3) erstrecken.

10. Wärmedämmplatte nach einem der Ansprüche 8 oder 9, **dadurch gekennzeichnet, dass** die kapillarleitfähigen Bereiche (2) als kapillarleitfähige Durchbrüche ausgebildet sind, insbesondere als Durchbrüche, die mit einem kapillarleitfähigem Material gefüllt sind.

11. Wärmedämmplatte nach einem der Ansprüche 8 bis 10, **dadurch gekennzeichnet, dass** die kapillarleitfähigen Bereiche (2) von kapillaraktiven Hohlräumen gebildet sind.

12. Wärmedämmplatte nach einem der Ansprüche 8 bis 11, **dadurch gekennzeichnet, dass** die Dämmschicht (3) dicker ist als die kapillarleitfähige Schicht (4) und die kapillarleitfähige Feuchtepufferschicht (5), insbesondere mehr als doppelt so dick ist, wie die Summe der beiden anderen Schichten.

13. Wärmedämmplatte nach einem der Ansprüche 8 bis 12, **dadurch gekennzeichnet, dass** die Durchbrüche in der Dämmschicht einen Durchmesser von etwa 4 mm aufweisen.

14. Wärmedämmplatte nach einem der Ansprüche 8 bis 13, **dadurch gekennzeichnet, dass** die kapillarleitfähige Schicht und die kapillarleitfähigen Bereiche aus unterschiedlichen Stoffen gebildet sind.

## Claims

1. A wall construction with a wall (11) and an inner insulation layer (3), the insulation layer comprising capillary-conductive regions, which run from one side of the insulation layer to the other side of the insulation layer,
**characterized in that**
the wall construction (10) comprises a capillary-conductive layer (4), which is arranged behind the insulation layer (3) on the wall side and is connected to the capillary-conductive regions (2),
**in that** the wall construction (10) comprises a capillary-conductive moisture buffer layer (5) on the visible side and **in that** the capillary-conductive regions make up 1 to less than 2 % of the area of the insulation layer.

2. The wall construction according to claim 1, **characterized in that** the capillary-conductive regions (2) are formed as capillary-conductive apertures, which are filled with a capillary-conductive material.

3. The wall construction according to claim 1, **characterized in that** the capillary-conductive areas (2) are **characterized by** capillary-active cavities.

4. The wall construction according to claim 3, **characterized in that** the capillary-conductive layer (4) consists of the same material as the material in the capillary-conductive regions.

5. The wall construction according to one of the claims 3 or 4, **characterized in that** the capillary-conductive layer (4) is an adhesive layer.

6. The wall construction according to one of the preceding claims, **characterized in that** the insulation layer (3) is thicker than the capillary-conductive layer (4) and the capillary-conductive moisture buffer layer (5), in particular more than twice as thick as the sum of the two other layers.

7. The wall construction according to one of the preceding claims, **characterized in that** the apertures have a diameter of approximately 4 mm.

8. Thermal insulation plate as inner insulation plate with an insulation layer (3) for a wall construction, in particular for a wall construction according to one of the claims 1 to 7, the insulation layer (3) comprising capillary-conductive regions (2), which run from one side of the insulation layer to the other side of the insulation layer, **characterized in that** the thermal insulation plate (1) comprises a capillary-conductive layer (4) which is connected with the capillary-conductive regions, that the thermal insulation plate (1) comprises a capillary-conductive moisture buffer layer (5),
that the capillary-conductive moisture buffer layer (5) and the capillary-conductive layer (4) are arranged at opposite sides of the insulation layer (3) and that the capillary-conductive regions make up 1 to less 2% of the insulated area.

9. The thermal insulation plate according to claim 8, **characterized in that** the capillary-conductive areas (2) extend vertically through the insulation layer (3).

10. The thermal insulation plate according to one of the claims 8 or 9, **characterized in that** the capillary-conductive areas (2) are configured as capillary-conductive apertures, in particular as apertures which are filled with a capillary-conductive material.

11. The thermal insulation plate according to one of the claims 8 to 10, **characterized in that** the capillary-conductive areas (2) are formed by capillary-active cavities.

12. The thermal insulation plate according to one of the claims 8 to 11, **characterized in that** the insulation layer (3) is thicker than the capillary-conductive layer (4) and the capillary-conductive moisture buffer layer (5), in particular more than twice as thick as the sum of the two other layers.

13. The thermal insulation plate according to one of the claims 8 to 12, **characterized in that** the apertures in the insulation layer have a diameter of approximately 4 mm.

14. The thermal insulation plate according to one of the claims 8 to 13, **characterized in that** the capillary-conductive layer and the capillary-conductive areas are formed from different materials.

## Revendications

1. Structure de mur avec une couche isolante (3) et avec une couche isolante (3) interne, la couche isolante comportant des zones conductrices capillaires, qui s'étendent en continu d'un côté de la couche isolante vers l'autre côté de la couche isolante,
**caractérisée en ce que**
la structure de mur (10) comporte une couche conductrice capillaire (4) qui du côté du mur est disposée derrière la couche isolante (3) et qui est reliée avec les zones (2) conductrices capillaires,
**en ce que** la structure de mur (10) comporte du côté visible une couche conductrice capillaire à effet tampon sur l'humidité (5) et **en ce que** les zones conductrices capillaires correspondent à 1 jusqu'à moins de 2 % de la surface isolée.

2. Structure de mur selon la revendication 1, **caractérisée en ce que** les zones (2) conductrices capillaires sont conçues en tant qu'ajours conducteurs capillaires, qui sont remplis d'une matière conductrice capillaire.

3. Structure de mur selon la revendication 1, **caractérisée en ce que** les zones (2) conductrices capillaires sont formées par des cavités capillaires actives.

4. Structure de mur selon la revendication 3, **caractérisée en ce que** la couche (4) conductrice capillaire est constituée de la même matière que la matière dans les zones (2) conductrices capillaires.

5. Structure de mur selon l'une quelconque des revendications 3 ou 4, **caractérisée en ce que** la couche (4) conductrice capillaire est une couche adhésive.

6. Structure de mur selon l'une quelconque des revendications précédentes, **caractérisée en ce que** la couche isolante (3) est plus épaisse que la couche (4) conductrice capillaire et la couche conductrice capillaire à effet tampon sur l'humidité (5), notamment plus que deux fois plus épaisse que la somme des deux autres couches.

7. Structure de mur selon l'une quelconque des revendications précédentes, **caractérisée en ce que** les ajours présentent un diamètre d'environ 4 mm.

8. Panneau isolant thermique servant de panneau isolant intérieur avec une couche isolante (3), pour une structure de mur, notamment pour une structure de mur selon l'une quelconque des revendications 1 à 7, la couche isolante (3) comportant des zones (2) conductrices capillaires, qui s'étendent en continu d'un côté de la couche isolante vers l'autre côté de la couche isolante,
**caractérisé en ce que**
le panneau isolant thermique (1) comporte une couche (4) conductrice capillaire qui est reliée avec les zones (2) conductrices capillaires,
**en ce que** le panneau isolant (1) comporte une couche (5) conductrice capillaire à effet tampon sur l'humidité,
**en ce que** la couche (5) conductrice capillaire à effet tampon sur l'humidité et la couche (4) conductrice capillaire sont disposées sur des côtés opposés de la couche isolante (3) et **en ce que** les zones conductrices capillaires correspondent à 1 jusqu'à moins de 2 % de la surface isolée.

9. Panneau isolant thermique selon la revendication 8, **caractérisé en ce que** les zones (2) conductrices capillaires s'étendent à la perpendiculaire de la couche isolante (3).

10. Panneau isolant thermique selon l'une quelconque des revendications 8 ou 9, **caractérisée en ce que** les zones (2) conductrices capillaires sont conçues en tant qu'ajours conducteurs capillaires, notamment en tant qu'ajours qui sont remplis d'une matière conductrice capillaire.

11. Panneau isolant thermique selon l'une quelconque des revendications 8 à 10, **caractérisé en ce que** les zones (2) conductrices capillaires sont formées par des cavités capillaires actives.

12. Panneau isolant thermique selon l'une quelconque des revendications 8 à 11, **caractérisé en ce que** la couche isolante (3) est plus épaisse que la couche (4) conductrice capillaire et la couche (5) conductrice capillaire à effet tampon sur l'humidité, notamment plus que deux fois plus épaisse que la somme des deux autres couches.

13. Panneau isolant thermique selon l'une quelconque des revendications 8 à 12, **caractérisé en ce que** les ajours dans la couche isolante présentent un diamètre d'environ 4 mm.

14. Panneau isolant thermique selon l'une quelconque des revendications 8 à 13, **caractérisé en ce que** la couche conductrice capillaire et les zones conductrices capillaires sont conçues dans des matériaux différents.
